# EUROPEAN PATENT APPLICATION

(11) **EP 2 458 835 A1**
(43) Date of publication of application: **30.05.2012**
(21) Application number: 10809503.5
(22) Date of filing: 21.06.2010
(51) Int. Cl.: H04M 3/42

(54) **METHOD AND APPLICATION SERVER FOR OBTAINING THE USERS' CAPABILITY IN THIRD PARTY CALL CONTROL**

(30) Priority: 20.08.2009 CN 200910162972
(71) Applicant: ZTE Corporation, Shenzhen, Guangdong 518057 (CN)
(72) Inventor: YU, Xutao, Shenzhen Guangdong 518057 (CN); GAO, Yang, Shenzhen Guangdong 518057 (CN); JIN, Bin, Shenzhen Guangdong 518057 (CN)
(74) Representative: Jansen, Cornelis Marinus
(86) International application number: PCT/CN2010/074171
(87) International publication number: WO 2011/020370

(57) **Abstract**

The present disclosure provides a method and an Application Server (AS) for obtaining user's capability in Third Party Call Control (3PCC), and the method comprises: when a user performs 3PCC, an AS stores the media information of the user; the AS performs media negotiation with the user according to the stored media information of the user. The application of the present disclosure solves the problem of the high failure probability of media negotiation caused by the current incorrect method for obtaining the user's media capability, and improves the utilization experience of users.

## Description

### TECHNICAL FIELD

The disclosure relates to the field of communications, and in particular to a method and an Application Server (AS) for obtaining user's capability in Third Party Call Control (3PCC).

### BACKGROUND

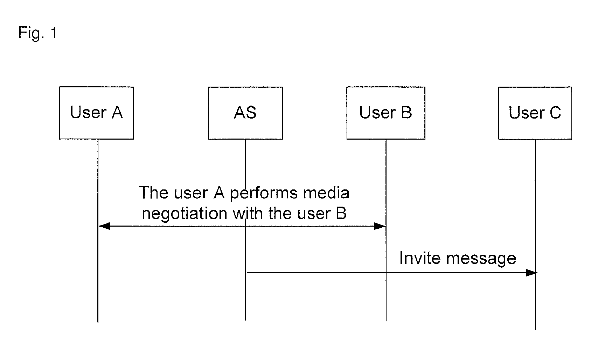

In the service flow of 3PCC, such as call forwarding on no reply and transfer, when an AS initiates a new call, an invite message (INVITE) sometimes needs to contain a media Session Description Protocol (SDP), in order to negotiate with a new called user. As shown in Fig. 1, a user A performs media negotiation with a user B, then an AS initiates a call to a user C, that is, the AS sends an invite message to the user C, wherein the invite message contains an SDP.

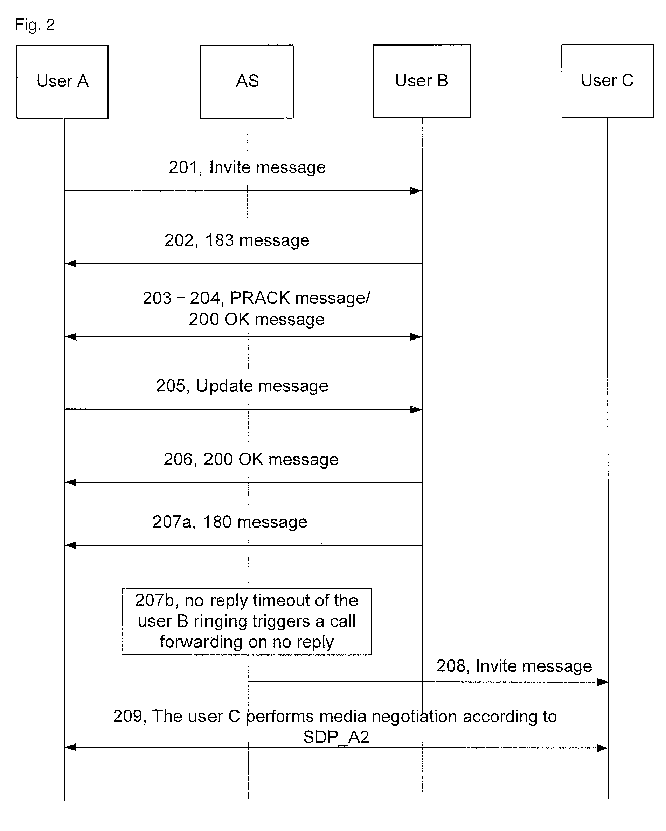

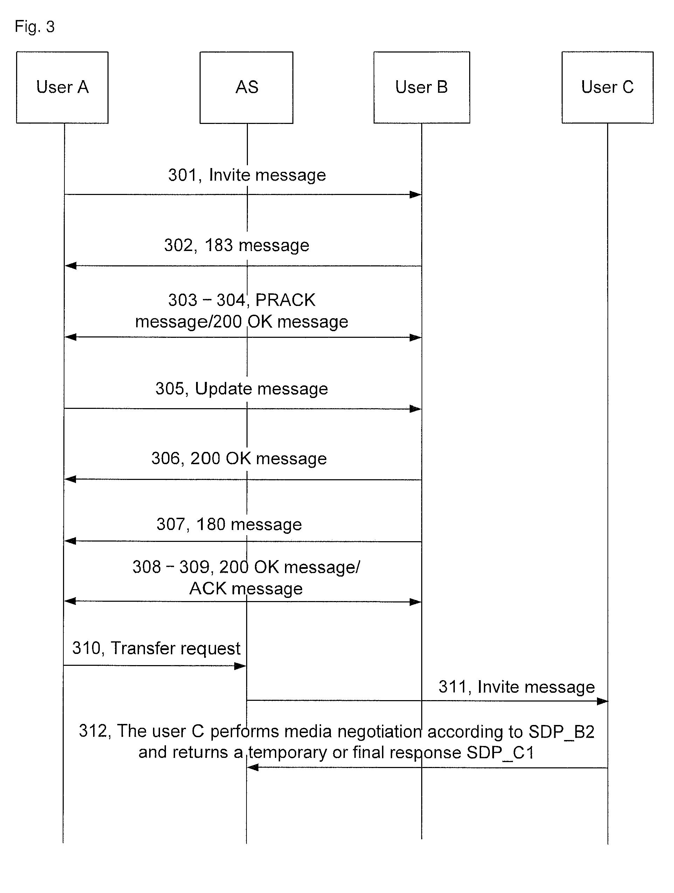

The specific application scenario is as follows:
1. as shown in Fig. 2, a flow of call forwarding on no reply comprises the following steps:
   step 201: a user A initiates a call establishment message to a user B via an AS, that is, the user A sends an invite message to the user B through the AS, wherein the invite message contains SDP_A1;
   step 202: the user B returns a 183 message which contains SDP_B1;
   steps 203-204: the user A and the user B perform interaction of a PRACK message and a 200 OK message;
   step 205: the user A returns an update message (UPDATE) which contains SDP_A2;
   step 206: the user B returns a 200 OK message which contains SDP_B2;
   step 207a: the user B returns a 180 message of ringing;
   step 207b: no reply timeout of the user B triggers a call forwarding on no reply;
   step 208: the AS initiates a call to a user C, that is, the AS sends an invite message to the user C, wherein the invite message contains SDP_A2; and
   step 209: the user A and the user C perform media negotiation according to SDP_A2.
2. As shown in Fig. 3, a flow of transfer comprises the following steps:
   step 301: a user A initiates a call establishment message to a user B via an AS, that is, the user A sends an invite message to the user B through the AS, wherein the invite message contains SDP_A1;
   step 302: the user B returns a 183 message which contains SDP_B1;
   steps 303-304: the user A and the user B perform interaction of a PRACK message and a 200 OK message;
   step 305: the user A returns an update message which contains SDP_A2;
   step 306: the user B returns a 200 OK message which contains SDP_B2;
   step 307: the user B returns a 180 message of ringing;
   steps 308-309: the user B returns a 200 OK message of pick-up and the user A returns an acknowledgement (ACK) message;
   step 310: the user A initiates a transfer request to the AS;
   step 311: the AS initiates a call establishment request to a user C, that is, the AS sends an invite message to the user C, wherein the invite message contains SDP_B2; and
   step 312: the user C performs negotiation according to SDP_B2 and returns a response SDP_C1.

In the flows above, there exists a common problem, that is, the user media carried when calling the user C is probably negotiated with another user, being negotiated means that this media is probably not the initial user media; and the specific content of the media, such as encoding/decoding format, might probably be selected (that is, be reduced or changed), due to the negotiation; if this media is used for calling the user C, the failure probability of media negotiation with the user C might be increased.

Flow examples with the problem are specifically as follows:
1. The flow of call forwarding on no reply:
   providing:
      media format supported by the user A is: 4(G723) and 18(G729);
      media format supported by the user B is: 4(G723);
      media format supported by the user C is: 18(G729);
      accordingly, when the user A calls the user B, the user B does not reply, and the media format negotiated by the user A and the user B is 4(G723);
      if the negotiated media of the user A with the media format of 4(G723) is used for calling the user C, the negotiation fails; however, actually, the user A which supports 4(G723) or 18(G729) and the user C which supports 18(G729) could have performed negotiation successfully.
2. The flow of transfer
   providing:
   media format supported by the user A is: 4(G723)
   media format supported by the user B is: 4(G723) and 18(G729);
   media format supported by the user C is: 18(G729);
   accordingly, when the user A calls the user B, since the initial media of the user A is only provided with the media format of 4(G723) and the user B is the called party, 4(G723) is selected as the media format of negotiated media of the user B for response; since the media with media format of 4(G723) is carried as the media of the user B when calling the user C, but the user C supports 18(G729) other than 4(G723), the negotiation fails; however, actually, the user B which supports 4(G723) or 18(G729) and the user C which supports 18(G729) theoretically could have performed negotiation successfully.

It can be seen from the examples above that, in actual application, the failure probability of media negotiation is increased due to the incorrect method for obtaining the user's media capability; therefore, a technical solution is required to solve the problem above.

### SUMMARY

The technical problem to be solved by the disclosure is to provide a method and an Application Server (AS) for obtaining user's capability in Third Party Call Control (3PCC), which solve the problem of the high failure probability of media negotiation caused by the current incorrect method for obtaining the user's media capability.

In order to solve the problem above, the disclosure provides a method for obtaining user's capability in 3PCC, and the method comprises the following steps:
when a user performs 3PCC, an AS stores media information of the user; and
the AS performs media negotiation with the user according to the stored media information of the user.

The present disclosure also provides an AS used for a user to perform 3PCC, wherein the AS is configured to store media information of the user and to perform media negotiation according to the stored media information of the user.

Compared with the prior art, application of the present disclosure solves the problem of the high failure probability of media negotiation caused by the current incorrect method for obtaining the user's media capability, and improves the utilization experience of users.

### BRIEF DESCRIPTION OF THE DRAWINGS

Fig. 1 shows a flowchart illustrating that a user A performs media negotiation with a user B and an AS initiates a call to a user C according to the prior art;
Fig. 2 shows a flowchart of call forwarding on no reply according to the prior art;
Fig. 3 shows a flowchart of transfer according to the prior art;
Fig. 4 shows a flowchart of call forwarding on no reply according to an embodiment of the present disclosure; and

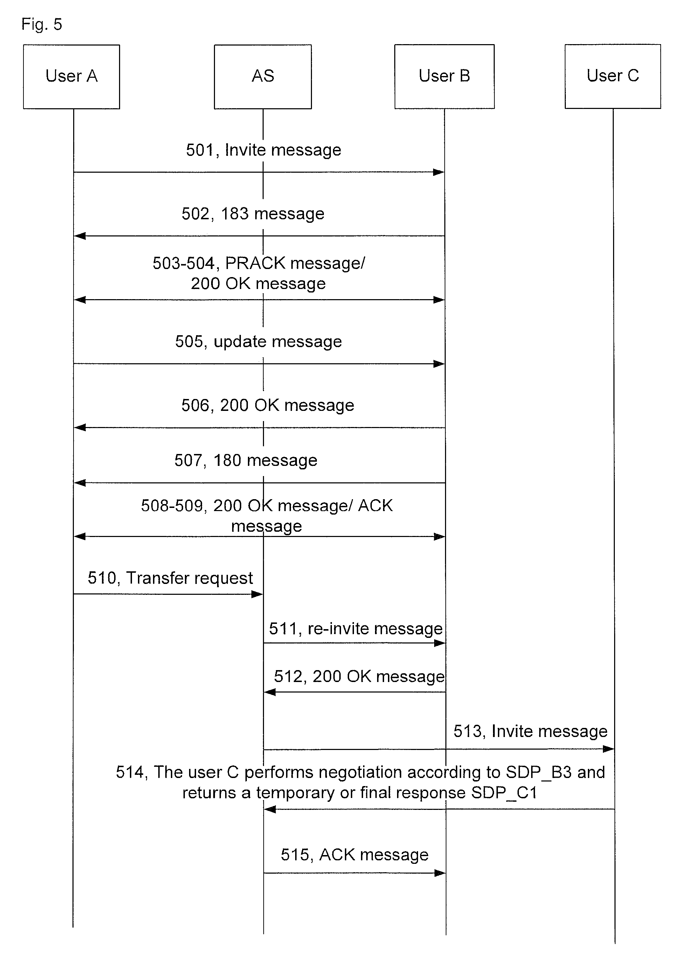

Fig. 5 shows a flowchart of transfer according to an embodiment of the present disclosure.

### DETAILED DESCRIPTION

The present disclosure is further illustrated below in conjunction with accompanying drawings and specific embodiments.

The main idea of the present disclosure is: an AS stores media information of a user; when the user performs 3PCC, the AS performs media negotiation according to the stored media information of the user.

Specifically: a method, a processing policy and an applicable scenario, for obtaining a relatively full media capability by storing the original media and by switching among users using a re-invite message containing no media, which are not limited to the service of the call forwarding on no reply and the transfer service; and the present disclosure is also applicable to other third party control call services.

Specifically, there is Method 1: the AS stores the media of a calling user when the calling user carries its own media for the first time, and then sends the obtained media when a call is needed to be sent;

Specifically, there is Method 2: for the acquisition of the media of a called user, the AS needs to send a re-invite message containing no media to the called user after a call is made, and stores the media after a response which contains the media and made by the called user is reported, and then sends the obtained media when the media is needed to be sent.

For the calling user, Method 1 is generally applied, because the calling user generally carries a set of its own media when initiating a call; of course, Method 2 also can be applied to obtaining the media. If the calling user carries no media when initiating a call, in this situation, the called user returns media first, and Method 2 is needed to obtain the media of the calling user.

For the called user, Method 2 is generally applied; if the calling user carries no media when calling the called user, then the media returned by the called user for the first time can also be stored to be used when a call is initiated, similar to Method 1.

The AS provided by the present disclosure is used in the process that a user performs 3PCC.

The Application Server (AS) is configured to store the media information of the user and perform media negotiation according to the stored media information of the user.

When the user performs service of 3PCC call forwarding on no reply, the step that the AS stores the media information of the user comprises:
the AS interacts with the calling user to obtain and store the media information of the calling user when the calling user carries its own media information for the first time.

When the calling user performs 3PCC transfer service, the step that the AS stores the media information of the user comprises:
the AS sends a re-invite message containing no media information to the called user after the calling user makes a call with the called user, and stores the media information of the called user contained in a response returned by the called user.

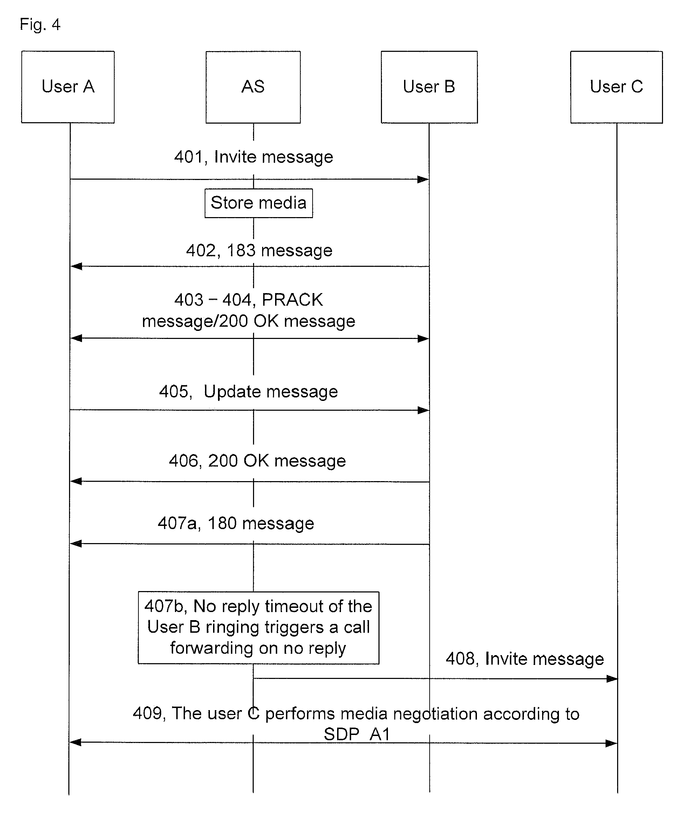

The present disclosure is further illustrated below in conjunction with specific embodiments.
1. An AS stores the original media of a calling user into a data area, makes no change to the media in the following negotiation, and waits to carry the media when a call is sent; as shown in Fig. 4, the flow comprises the following steps:
   step 401: a user A initiates a call establishment message to a user B via an AS, that is, the user A sends an INVITE message to the user B through the AS, wherein the INVITE message contains media SDP_A1; the AS stores the media into the data area;
   step 402: the user B returns to the user A a 183 message which contains media SDP_B1;
   steps 403-404: the user A and the user B perform interaction of a PRACK message and a 200 OK message;
   step 405: the user A returns to the user B an update message which contains media SDP_A2;
   step 406: the user B returns to the user A a 200 OK message which contains media SDP_B2;
   step 407a: the user B returns a 180 message of ringing;
   step 407b: no reply timeout of the user B ringing triggers a call forwarding on no reply;
   step 408: the AS initiates a calling message to a user C, that is, the AS sends an INVITE message to the user C, wherein the INVITE message contains media SDP_A1; and
   step 409: the user C performs media negotiation with the user A according to the received media SDP_A1.

The user A performs end-to-end negotiation with the user C, and the subsequent process is performed.
2. An AS obtains the media of a called user by switching using a re-invite message containing no media after making a call with the called user, and stores the obtained media after finishing the re-invite process and then waits to carry the media when a call is sent; as shown in Fig. 4, the flow comprises the following steps:
   step 501: a user A initiates a call establishment message to a user B via an AS, that is, the user A sends an INVITE message to the user B through the AS, wherein the INVITE message contains media SDP_A1;
   step 502: the user B returns to the user A a 183 message which contains media SDP_B1;
   steps 503-504: the user A and the user B perform interaction of a PRACK message and a 200 OK message;
   step 505: the user A returns to the user B an update message which contains media SDP_A2;
   step 506: the user B returns to the user A a 200 OK message which contains media SDP_B2;
   step 507: the user B returns a 180 message of ringing;
   steps 508-509: the user B returns a 200 OK message of pick-up to the user A and the user A returns an ACK message to the user B;
   step 510: the user A initiates a transfer request to the AS;
   step 511: the AS sends a re-invite message containing no media to the user B, wherein the re-invite message is expressed as re-INVITE (with no SDP);
   step 512: the user B returns to the AS a 200 OK response which contains media SDP_B3; and the AS stores the obtained media SDP_B3;
   step 513: the AS initiates a call establishment request to the user C, that is, the AS sends an INVITE message to the user C, wherein the INVITE message contains SDP_B3;
   step 514: the user C performs negotiation according to the received media SDP_B3 and returns a temporary or final response SDP_C1 to the AS; and
   step 515: the AS sends to the user B an ACK message which contains SDP_C1; the user B and the user C performs end-to-end negotiation, and the subsequent process is performed.

The above is only the preferred specific embodiments of the present disclosure; however, the protection scope of the present disclosure is not limited to the above; any changes and substitutes easily thought by those skilled in the art, within the technical scope of the present disclosure, shall be included within the protection scope of the present disclosure; therefore, the protection scope of the present disclosure should be based on the protection scope of the claims.

## Claims

1. A method for obtaining user's capability in Third Party Call Control (3PCC), comprising:
storing, by an Application Server (AS), media information of a user when the user performs 3PCC;
performing, by the AS, media negotiation with the user according to the stored media information of the user.

2. The method according to claim 1, wherein when a calling user performs service of 3PCC call forwarding on no reply, the step of storing the media information of the user by the AS comprises:
in the condition that the AS interacts with the calling user, obtaining and storing, by the AS, the media information of the calling user carried by the calling user for the first time.

3. The method according to claim 1, wherein when the calling user performs 3PCC transfer service, the step of storing the media information of the user by the AS comprises:
in the condition that the AS sends a re-invite message containing no media information to a called user after the calling user makes a call with the called user, storing, by the AS, the media information of the called user contained in a response from the called user.

4. The method according to claim 1, wherein when the calling user performs service of 3PCC call forwarding on no reply, the storing comprises: in the condition that the calling user initiates a call establishment message to the called user via the AS and the call establishment message contains the media information of the calling user, storing, by the AS, the media information of the calling user; and
the media negotiation comprises: in the condition that no reply timeout of the called user ringing triggers a call forwarding on no reply after the calling user interacts with the called user, sending, by the AS, a calling message to a third user, wherein the calling message contains the stored media information of the calling user; then performing, by the third user, media negotiation with the calling user according to the received media information of the calling user to finish the service of the call forwarding on no reply.

5. The method according to claim 4, wherein the step that the calling user interacts with the called user comprises:
returning, by the called user, a 183 message to the calling user, wherein the 183 message contains the media information of the called user;
performing, by the calling user and the called user, interaction of a PRACK message and a 200 OK message;
returning, by the calling user, an update message to the called user, wherein the update message contains the media information of the calling user;
returning, by the called user, a 200 OK message to the calling user, wherein the 200 OK message contains the media information of the called user; and ringing by the called user.

6. The method according to claim 1, wherein when the calling user performs 3PCC transfer service, the storing comprises: in the condition that the calling user initiates a transfer request to the AS after the calling user makes a call with the called user, then the AS sends a re-invite message containing no media information to the called user and the called user returns to the AS a 200 OK message which contains the media information of the called user, storing, by the AS, the media information of the called user; and
the media negotiation comprises: sending, by the AS, a call establishment request to a third user, wherein the call establishment request contains the stored media information of the called user; performing, by the third user, media negotiation according to the received media information of the called user and returning a temporary or final response to the AS, wherein the temporary or final response contains media information of the third user; sending, by the AS, an ACK message to the called user, wherein the ACK message contains the media information of the third user; and performing end-to-end negotiation by the called user and the third user, to finish the transfer service.

7. The method according to claim 6, wherein the step that the calling user makes a call with the called user comprises:
initiating, by the calling user, a call establishment message to the called user via the AS, wherein the call establishment message contains the media information of the calling user;
returning, by the called user, a 183 message to the calling user, wherein the 183 message contains the media information of the called user;
performing, by the calling user and the called user, interaction of a PRACK message and a 200 OK message;
returning, by the calling user, an update message to the called user, wherein the update message contains the media information of the calling user;
returning, by the called user, a 200 OK message to the calling user, wherein the 200 OK message contains the media information of the called user; and ringing, by the called user; and
returning, by the called user, a 200 OK message of pick-up to the calling user, and returning, by the calling user, an ACK message to the called user.

8. An Application Server (AS) for performing 3PCC by a user, the AS being configured to store media information of a user and perform media negotiation with the user according to the stored media information of the user.

9. The AS according to claim 8, wherein the AS is further configured to store the media information of the user when the calling user performs service of 3PCC call forwarding on no reply; and the storing comprises: in the condition that the AS interacts with the calling user, obtaining and storing, by the AS, the media information of the calling user which is carried by the calling user for the first time.

10. The AS according to claim 8, wherein the AS is further used to store the media information of the user when the calling user performs 3PCC transfer service; the storing comprises: in the condition that the AS sends a re-invite message containing no media information to a called user after the calling user makes a call with the called user, storing, by the AS, the media information of the called user contained in a response from the called user.
